# EUROPÄISCHE PATENTANMELDUNG

(11) **EP 0 866 003 A1**
(43) Veröffentlichungstag der Anmeldung: **23.09.1998**
(21) Anmeldenummer: 97119934.4
(22) Anmeldetag: 14.11.1997
(51) Int. Cl.: B65G 47/08

(54) **Verfahren zur Herstellung von zu verpackenden Gruppen von in mehreren Reihen aber nestend angeordneten zylindrischen Produkten**

(30) Priorität: 05.03.1997 DE 19708814; 15.04.1997 DE 19715613
(71) Anmelder: KISTERS MASCHINENBAU GMBH, D-47533 Kleve (DE)
(72) Erfinder: Marti, Jean, 47533 Kleve (DE)
(74) Vertreter: Röther, Peter, Dipl.-Phys.

(57) **Zusammenfassung**

Bei einem Verfahren zur Herstellung von zu verpackenden Gruppen von in mehreren Reihen nebeneinander aber nestend angeordneten zylindrischen Produkten (2) wie Flaschen, Dosen etc., wobei jeweils eine Reihe aus n Produkten mindestens einer Reihe aus n-1 Produkten benachbart angeordnet ist, ist erfindungsgemäß vorgesehen, daß aus einem ankommenden Strom von in mehreren nebeneinander angeordneten Linien (4) transportierten Produkten (2) jeweils zwei benachbarte Produktreihen unabhängig voneinander abgeteilt werden, wobei die eine Produktreihe aus n Produkten und die andere aus n-1 Produkten besteht, die so abgeteilten Produktreihen in Transportrichtung um eine bestimmte Strecke vorgeschoben werden, an deren Endpunkt die benachbarten, aus n Produkten und n-1 Produkten bestehenden Reihen derart positioniert sind, daß sich die in Transportrichtung hinteren Produkte aller abgeteilten Reihen auf etwa gleicher Höhe nebeneinander befinden, wonach die gesamte Gruppe (10) weiter transportiert wird und dabei die n-1-Produktreihen um etwa den halben Produktdurchmesser verschoben werden und durch seitliche Kraftausübung auf die jeweilige Produktgruppe (10) die Produkte in die nestende Anordnung bewegt werden, wonach die so entstandenen Gebinde abschließend verpackt werden.

## Beschreibung

Die Erfindung betrifft ein Verfahren zur Herstellung von zu verpackenden Gruppen von mehreren Reihen nebeneinander aber nestend angeordneten zylindrischen Produkten wie Flaschen, Dosen etc., wobei jeweils eine Reihe aus n Produkten mindestens einer Reihe aus n-1 Produkten benachbart angeordnet ist.

Darüber hinaus betrifft die Erfindung eine Vorrichtung zur Durchführung des Verfahrens.

Üblicherweise werden Produkte wie Getränkedosen, Konservendosen, Getränkeflaschen etc. in einem geradzahligen Verbund wie z. B. Sechserpacks, Zwölferpacks usw. auf Trays, in Kartons oder allein von einer Schrumpffolie umhüllt verpackt.

Die Produkte stehen hierbei in einer Rechteckanordnung, wobei zwischen ihnen unvermeidbar relativ große Lücken verbleiben, so daß die Gebinde eine relativ große Fläche einnehmen und damit einen relativ hohen Verpackungsmaterialbedarf erfordern.

Darüberhinaus läßt die Eigenstabilität von lediglich mit Kunststoffolie umschrumpften Gebinden zu wünschen übrig, da in dieser Anordnung maximal vier Berührungspunkte pro Produkt vorhanden sind.

Daher werden mittlerweile auch Packungen angeboten, bei denen die Produkte nestend angeordnet sind, d.h., daß Produkte benachbarter Reihen um den halben Produktdurchmesser versetzt zueinander angeordnet werden und sich so eine dichteste Packung ergibt, bei der die Produkte bis zu sechs Berührungspunkte mit benachbarten Produkten erhalten.

Allerdings bereitet im vollautomatischen Verpackungsbetrieb die Erzeugung derartiger nestender Anordnungen Schwierigkeiten, da die Vereinzelung von Reihen mit unterschiedlicher Produktanzahl mit erheblichen Problemen verbunden ist.

Hinzu kommt, daß mehr und mehr von der Kundschaft, beispielsweise Getränkeherstellern, Sonderpackungsgrößen gefordert werden, z.B. zu Werbezwecken. So werden Flaschen- oder Dosengebinde vertrieben, bei denen zur üblichen Anzahl von Dosen oder Flaschen eine zusätzliche Dose oder Flasche vorhanden ist, also "6+1" oder "12+1" etc..

Dabei sollen derartige Gebinde aber aus technischen und wirtschaftlichen Gründen nicht mehr Platz bzw. Verpackungsmaterial in Anspruch nehmen als die Standartverpackungen. Außerdem soll durch die Hinzufügung des einen weiteren Produkts die Verarbeitungsgeschwindigkeit der Verpackungsmaschine nicht signifikant verringert werden.

Der Erfindung liegt daher die Aufgabe zugrunde, ein Verfahren der eingangs genannten Art so zu führen, daß eine nestende Anordnung der zu verpackenden Produkte im vollautomatischen Betrieb möglich ist und zwar ohne aufwendige Umrüstarbeiten an der Verpackungsmaschine, auch wenn Sondergebinde mit ungeradzahliger Produktmenge hergestellt werden sollen.

Die Erfindung löst diese Aufgabe mit Hilfe der Merkmale des kennzeichnenden Teils des Anspruchs 1.

Eine weitere Aufgabe der Erfindung wird darin gesehen, eine Vorrichtung zur Durchführung des Verfahrens anzugeben.

Erfindungsgemäß wird diese Aufgabe mit den Merkmalen des Anspruchs 7 gelöst.

Weitere vorteilhafte Ausgestaltungen und Weiterbildungen der Erfindung ergeben sich aus den Unteransprüchen.

Kernpunkt der Erfindung ist die separate Abteilung von Produktreihen, bei denen jede zweite eine gerade Anzahl und die benachbarten eine ungerade Anzahl an Produkten aufweist, wobei die so abgeteilten Produktreihen eine vorläufige Anordnung erhalten, so daß sie im weiteren Verlauf des Verfahrens durch seitliche Kraftausübung auf die Produktreihen automatisch in die nestende Anordnung überführt werden.

Das geschieht erfindungsgemäß auf mehrere konstruktiv relativ einfache Arten und Weisen. So gemäß Anspruch 2 dadurch, daß die seitliche Kraftausübung getaktet durch in Richtung senkrecht zur Transportrichtung wirkende Druckmittelzylinder erfolgt.

In einer bevorzugten Verfahrensvariante geschieht die seitliche Kraftausübung im kontinuierlichen Verfahren gemäß Patentanspruch 3 dadurch, daß die Produktgruppen im kontinuierlichen Betrieb nach der Abteilung und Ausrichtung in eine sich verengende Transportstrecke gelangen, in der sich die Produkte der n-1-Produktreihen in Zusammenwirken mit der sich verengenden Transportstrecke in die nestende Anordnung mit den Produkten der n-Reihen bewegen.

In einer ersten Alternative werden die einzelnen Produktreihen von zwei in Transportrichtung hintereinander angeordneten Abteileinheiten aus dem in mehreren parallelen Linien in die Abteileinrichtung antransportierten Produktstrom abgeteilt, derart, daß beispielsweise in- der ersten Abteileinheit zunächst die (n-1)-Produktreihen abgesondert werden, diese in den Bereich der zweiten Abteileinheit vortransportiert werden, in der dann die (n)-Produktreihen abgeteilt werden und die aus gerad- und ungeradzahligen Reihen bestehenden Produktgruppen seitlich so verschoben werden, daß sich die nestende Anordnung von selbst ergibt.

Das geschieht vorteilhafterweise dadurch, daß sich an die abgeteilten Produktgruppen von hinten Mitnehmerstäbe anlegen, die in Transportrichtung vorne den (n-1)-Produktreihen zugeordnete Vorsprünge aufweisen, deren Länge in etwa dem halben Produktdurchmesser entspricht und die somit diese Produktreihen entsprechend gegenüber den n-Reihen versetzen.

Die Erfindung ist naturgemäß nicht auf das eben beschriebene Verfahren beschränkt. Wichtig ist jedoch, daß die Produktreihen mittels der Mitnehmer um den halben Produktdurchmesser gegeneinander versetzt werden.

Während im zuvor beschrieben Verfahrensablauf die Abteilung der unterschiedlichen Produktreihen in räumlicher und zeitlicher Abfolge geschieht, ist in einer zweiten Variante eine praktisch gleichzeitige Abteilung verwirklicht, indem hierbei die beiden Abteileinheiten übereinander angeordnet sind und die Abteilfinger der einen Abteileinheit von unten und diejenigen der zweiten Abteileinheit von oben in die Produktlinien einfahren. Der weitere Verfahrensablauf geschieht in entsprechender Weise wie zuvor beschrieben.

Eine dritte Variante sieht vor, die beiden Abteileinheiten ineinander zu verschachteln, derart, daß die Abteilfinger der beiden Abteileinheiten nebeneinander in einer Ebene arbeiten, wobei die Abteilfinger der einen Einheit mit dem größeren Rapport mit den Abteilfingern der anderen Abteileinheit mit kleinerem Rapport jeweils über die Breite der Transportstrecke abwechseln.

Durch einfaches Verstellen der Rapporte ist die Umstellung auf andere Produktabmessungen bzw. Produktanzahlen im herzustellenden Gebinde problemlos zu bewerkstelligen.

Die Mitnehmereinheit ist vorzugsweise oberhalb der Transportstrecke angeordnet, so daß die Mitnehmerstäbe von oben hinten hinter die jeweilige Produktgruppe gefahren werden und diese infolge der im Vergleich zur Geschwindigkeit des die Produktgruppen in den Bereich der Mitnehmereinheit transportierenden Transportbandes etwas größeren Geschwindigkeit der Mitnehmerstäbe von diesen eingeholt und weitertransportiert werden.

Die ankommenden Produktlinien sowie die abgeteilten Produktgruppen sind bis in den Bereich der Verengung seitlich geführt. Ab dem Ausgang des Verengungsabschnitts bedürfen die nun nestend angeordneten Produktgruppen keiner weiteren Führung und werden im folgenden auf Trays gestellt und mit Folie oder ohne Tray nur mit Folie umhüllt oder in Kartons verpackt.

Da in der Verengungsstrecke der Abstand der benachbarten Produktreihen zwangsläufig abnimmt, können die Vorsprünge an den Mitnehmerstäben so angeordnet sein, daß sie zu der gedachten Mittellängslinie der ihnen zugeordneten Produktreihen vor der Verengung außermittig stehen, nach der Verengung jedoch mit der Mittellängslinie fluchten.

Die Erfindung wird im folgenden anhand von Zeichnungen dargestellt und näher erläutert.

Es zeigen
- Fig. 1a: in Seitenansicht einen Teil einer Verpackungsmaschine mit der ersten Alternative einer Abteileinrichtung
- Fig. 1b: in Draufsicht die Transportstrecke gemäß Fig. 1 a
- Fig. 2a: in Seitenansicht einen Teil einer Verpackungsmaschine mit einer zweiten Alternative einer Abteileinrichtung
- Fig. 2b: in Draufsicht die Transportstrecke gemaß Fig.2 a
- Fig. 2c: Detail X aus Fig. 2 b
- Fig. 3: in Seitenansicht einen Teil einer Verpackungsmaschine mit einer dritten Alternative einer Abteileinheit.

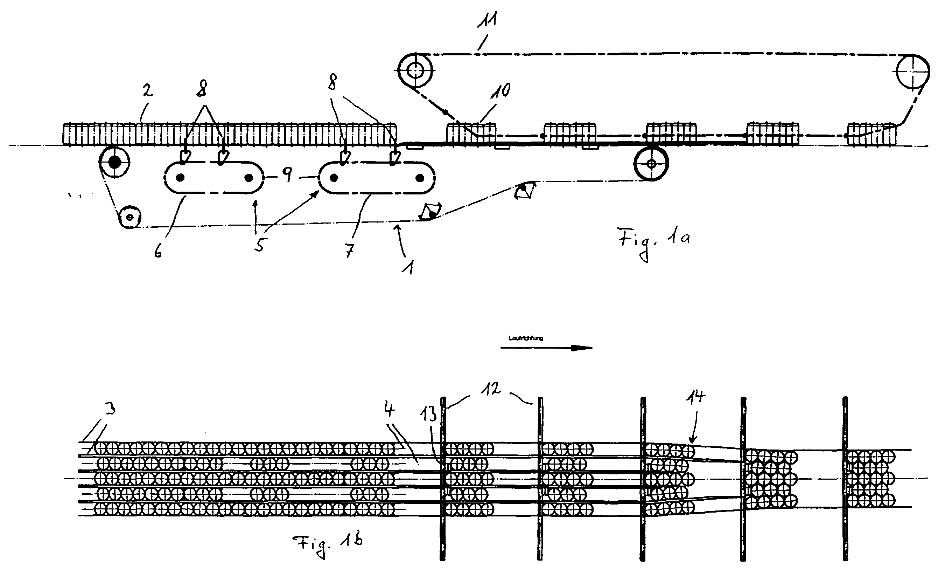

In den Figuren 1a bis 3 sind gleiche Elemente mit den gleichen Bezugszeichen versehen.

Dargestellt ist in den Figuren 1a, 2a und 3 jeweils in Seitenansicht ein Teil einer Verpackungsmaschine, mit der im vorliegenden Beispiel Getränkedosen aus einem kompakten Produktstrom abgeteilt und zu Produktgruppen vereinzelt werden. Die dargestellte Vorrichtung besteht im wesentlichen aus einem endlos umlaufenden Förderband 1, welches die von einer nicht dargestellten Zuführeinrichtung angelieferten und in seitlichen Führungen 3 zu parallelen Produktlinien 4 ausgerichteten Getränkedosen 2 einer allgemein mit dem Bezugszeichen 5 versehenen Abteileinrichtung zuführt.

Die Abteileinrichtung 5 besteht aus zwei unabhängig voneinander arbeitenden Abteileinheiten 6 und 7, deren Abteilfinger 8 an jeweils einer Kette 9 umlaufend angeordnet sind, wobei die Abteilfinger 8 der einen Abteileinheit 6 einen geringeren Abstand zueinander aufweisen als die Abteilfinger 8 der Abteileinheit 7. Durch den kleineren Rapport der Abteileinhei 6 werden im vorliegenden Beispiel aus jeder zweiten Produktlinie drei Produkte, d.h. Getränkedosen abgeteilt, während die Abteileinheit 7 aus den benachbarten Produktlinien 4 jeweils 4 Produkte abteilt.

Die Produktgruppen 10, die jetzt aus drei Reihen mit vier Produkten und dazwischen angeordneten zwei Reihen aus drei Produkten bestehen, werden mittels des Transportbandes 1 weiter transportiert.

Hinter der Abteileinrichtung 5 in Transportrichtung gesehen ist über dem Transportband 1 eine Mitnehmervorrichtung 11 angeordnet, welche aus zwei umlaufenden Ketten ( lediglich angedeutet ) besteht, an denen in regelmäßigen Abständen zueinander Mitnehmerstäbe 12 befestigt sind. Die Geschwindigkeit der Mitnehmerstäbe ist dabei etwas größer gewählt als die Geschwindigkeit des Transportbandes 1, so daß die Mitnehmerstäbe 12 von oben hinten sich an die in Transportrichtung hintere Reihe der Produkte 2 der Produktgruppen 10 anlegen und dabei die gesamte Produktgruppe weitertransportieren. Die Mitnehmerstäbe 12 weisen in Transportrichtung vorne im vorliegenden Beispiel zwei Vorsprünge 13 auf, deren Länge in etwa dem halben Produktdurchmesser entspricht. Die Vorsprünge 13 sind den Reihen zugeordnet, in denen sich lediglich drei Produkte befinden. Die Produkte dieser Reihen werden somit um einen halben Produktdurchmesser vorgeschoben, so daß die Produkte 2 nebeneinander nicht auf gleicher Höhe sondern um den halben Produktdurchmesser versetzt angeordnet sind. Im weiteren Verlauf der Transportstrecke bewegen die Mitnehmerstäbe 12 die so angeordneten Produktgruppen auf eine konisch zulaufende Verengung 14 der Transportstrecke zu. Hier werden die Produkte seitlich aufeinanderzu bewegt, so daß am Ende der Verengung 14 eine dichte Packungsanordnung der Produkte 2 entsteht, die auch als nestend bezeichnet wird.

Sobald diese Packungsanordnung erreicht ist, fährt der jeweilige Mitnehmerstab 12 nach oben von der Produktgruppe 10 weg. Die Produktgruppen 10 mit den nestend angeordneten Produkten 2 werden im folgenden in einer nicht dargestellten Verpackungsstation beispielsweise mit einer Verpackungsfolie vollständig umwickelt, die dann in einem Schrumpftunnel um die Produktgruppe herumgeschrumpft wird. Die Produktgruppen können aber auch auf Trays abgestellt werden und dann mit einer Schrumpffolie umgeben werden oder aber sie können auch in Kartons verpackt werden ( wrap around ).

In der Fig.1a ist eine Abteileinrichtung 5 in einer ersten Alternative dargestellt. Hier sind die Abteileinheiten 6 und 7 in Transportrichtung hintereinander angeordnet.

Wie aus der Fig.1b hervorgeht, werden von der Abteileinheit 6 zunächst die Produktreihen mit den drei Getränkedosen abgeteilt und in Transportrichtung nach vorne transportiert bis zu einem Punkt, an dem sie in den Bereich der zweiten Abteileinheit 7 gelangen. Von der Abteileinheit 7 werden hier die Produktreihen mit den vier Getränkedosen abgeteilt, wonach alle abgeteilten Produkte in den Einflußbereich der Mitnehmervorrichtung 11 gelangen.

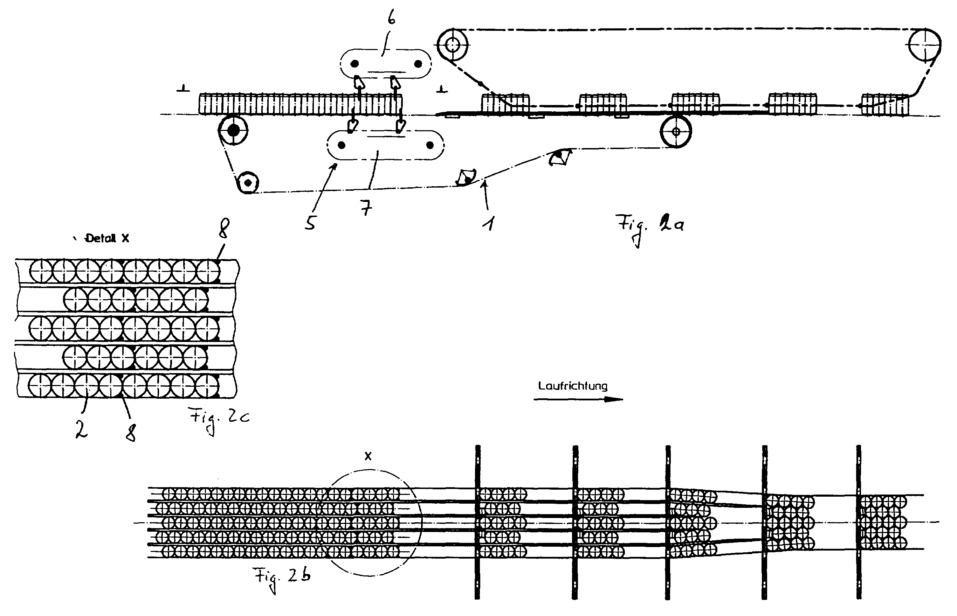

Die Vorrichtung gemäß der Fig.2a unterscheidet sich von der Vorrichtung gemäß Fig. 1a dadurch, daß hier die beiden Abteileinheiten 6 und 7 übereinander angeordnet sind, wobei die Abteileinheit 7 unterhalb und die Abteileinheit 6 oberhalb der Transportstrecke angeordnet ist. Bei dieser Alternative geschieht der Abteilvorgang beider Abteileinheiten 6 und 7 gleichzeitig, wie auch aus den Figuren 2b und 2c zu ersehen ist. Die folgenden Verfahrensschritte sind mit denen identisch, wie sie bezüglich der Figuren 1a und b beschrieben worden sind.

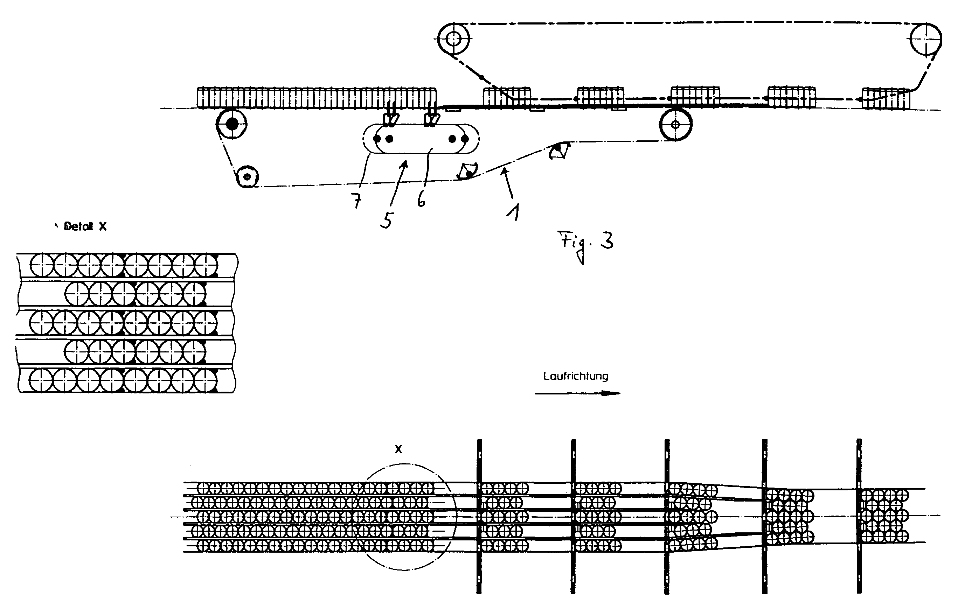

In der Figur 3 ist die Abteileinrichtung 5 in einer dritten Alternative dargestellt. Bei dieser Ausführungsvariante sind die Abteileinheiten 6 und 7 verschachtelt nebeneinander angeordnet, so daß über die Breite der Transportstrecke gesehen die Abteilfinger 8 der Abteileinheit 6 mit den Abteilfingern 8 der Abteileinheit 7 abwechseln. Auch bei dieser Variante geschieht die Abteilung der Produktreihen mit den geradzahligen und den ungeradzahligen Produktmengen gleichzeitig.

Mit allen drei Varianten ist es somit möglich, auf einfache Weise Produktgruppen in nestender Anordnung zu erzeugen, die zum einen den Vorteil haben, daß sie platzsparend angeordnet sind und durch diese nestende Anordnung eine gute Eigenstabilität aufweisen, auch wenn sie lediglich in eine Schrumpffolie verpackt werden. Zum anderen ist es mit Hilfe des vorgenannten Verfahrens bzw. der Vorrichtung möglich, Sonderpackungsgrößen wie z.B. 10 + 1 oder 12 + 1 zu erzeugen.

## Patentansprüche

1. Verfahren zur Herstellung von zu verpackenden Gruppen von in mehreren Reihen nebeneinander aber nestend angeordneten zylindrischen Produkten wie Flaschen, Dosen etc., wobei jeweils eine Reihe aus n Produkten mindestens einer Reihe aus n-1 Produkten benachbart angeordnet ist,
dadurch gekennzeichnet,
daß aus einem ankommenden Strom von in mehreren nebeneinander angeordneten Linien (4) transportierten Produkten (2) jeweils zwei benachbarte Produktreihen unabhängig voneinander abgeteilt werden, wobei die eine Produktreihe aus n Produkten und die andere aus n-1 Produkten besteht, die so abgeteilten Produktreihen in Transportrichtung um eine bestimmte Strecke vorgeschoben werden, an deren Endpunkt die benachbarten, aus n Produkten und n-1 Produkten bestehenden Reihen derart positioniert sind, daß sich die in Transportrichtung hinteren Produkte aller abgeteilten Reihen auf etwa gleicher Höhe nebeneinander befinden, wonach die gesamte Gruppe (10) weiter transportiert wird und dabei die n-1-Produktreihen um etwa den halben Produktdurchmesser verschoben werden und durch seitliche Kraftausübung auf die jeweilige Produktgruppe (10) die Produkte in die nestende Anordnung bewegt werden, wonach die so entstandenen Gebinde abschließend verpackt werden.

2. Verfahren nach Anspruch 1,
dadurch gekennzeichnet,
daß die seitliche Kraftausübung getaktet durch in Richtung senkrecht zur Transportrichtung wirkende Druckmittelzylinder erfolgt.

3. Verfahren nach Anspruch 1,
dadurch gekennzeichnet,
daß die Produktgruppen (10) im kontinuierlichen Betrieb nach der Abteilung und Ausrichtung in eine sich verengende Transportstrecke (14) gelangen, in der sich die Produkte der n-1-Produktreihen in Zusammenwirken mit der sich verengenden Transportstrecke (14) in die nestende Anordnung mit den Produkten der n-Reihen bewegen.

4. Verfahren nach einem der Ansprüche 1 bis 3,
dadurch gekennzeichnet,
daß aus dem ankommenden Strom von mehreren in nebeneinander angeordneten Linien transportierten Produkten die aus n-1 Produkten bestehenden Reihen zuerst abgeteilt und in Transportrichtung eine bestimmte Strecke vorgeschoben werden, an deren Endpunkt die benachbarten, aus n Produkten bestehenden Reihen abgeteilt werden.

5. Verfahren nach einem der Ansprüche 1 bis 3,
dadurch gekennzeichnet,
daß sowohl die n-Produktreihen als auch die n-1-Produktreihen von zwei miteinander zusammenwirkenden Abteileinheiten (6,7) gleichzeitig abgeteilt werden.

6. Verfahren nach einem der Ansprüche 3 bis 5,
dadurch gekennzeichnet,
daß sowohl die abzuteilenden als auch die abgeteilten Produkte (2) bis in die sich verengende Transportstrecke (14) hinein seitlich geführt werden.

7. Vorrichtung zur Durchführung des Verfahrens nach einem der Ansprüche 1 bis 6 mit einer Abteileinrichtung zum Abteilen definierter Produktgruppen aus einem in mehreren zueinander parallelen Linien in die Abteileinrichtung antransportierten Produktstrom, einem in Transportrichtung über die Abteileinrichtung hinausreichenden Transportband und mit Mitnehmerelementen, die sich von hinten an die abgeteilten Produktgruppen anlegen,
dadurch gekennzeichnet,
daß die Abteileinrichtung (5) aus zwei Abteileinheiten (6,7) mit zueinander unterschiedlichen Rapporten besteht, von denen eine (6,7) jeder zweiten Linie des Produktstroms und die andere (7,6) den diesen Linien benachbarten Linien zugeordnet ist, daß die Mitnehmerelemente (12) in Transportrichtung vorne jeder zweiten Reihe zugeordnete Vorsprünge (13) aufweisen, deren Länge in etwa dem halben Produktdurchmesser entspricht und hinter der Abteileinrichtung (6,7) Mittel zum Zusammenschieben der Reihen in die nestende Produktanordnung vorgesehen sind.

8. Vorrichtung nach Anspruch 7,
dadurch gekennzeichnet,
daß im Anschluß an das Transportband (1) die Transportstrecke von einer Breite b über eine konisch zulaufende Verengung (14) in eine Breite b' übergeht.

9. Vorrichtung nach Anspruch 7 oder 8,
dadurch gekennzeichnet,
daß die Abteileinheiten (6,7) räumlich voneinander getrennt sind.

10. Vorrichtung nach Anspruch 9,
dadurch gekennzeichnet,
daß die Abteileinheiten (6,7) in Transportrichtung hintereinander angeordnet sind.

11. Vorrichtung nach Anspruch 9,
dadurch gekennzeichnet,
daß die Abteileinheiten (6,7) übereinander angeordnet sind, derart, daß eine Abteileinheit (7) unterhalb und die andere (6) oberhalb des Produktstroms angeordnet ist.

12. Vorrichtung nach Anspruch 7 oder 8,
dadurch gekennzeichnet,
daß die Abteilfinger (8) der einen Abteileinheit (6) jeweils neben den Abteilfingern (8) der anderen Abteileinheit (7) entsprechend dem jeweiligen Rapport der Abteileinheiten versetzt zueinander in einer Ebene angeordnet sind.

13. Vorrichtung nach einem der Ansprüche 7 bis 12,
dadurch gekennzeichnet,
daß oberhalb der an die Abteileinrichtung (5) anschließenden Transportstrecke die Mitnehmervorrichtung (11) angeordnet ist, die aus mindestens einer umlaufenden Kette besteht, an der in konstanten Abständen zueinander Mitnehmerstäbe (12) angelenkt sind, die die in Transportrichtung nach vorne weisenden Vorsprünge (13) für die n-1-Produktreihen aufweisen.

14. Vorrichtung nach Anspruch 13,
dadurch gekennzeichnet,
daß die Vorsprünge (13) derart angeordnet sind, daß sie im Anschluß an die konische Verengung (14) der Transportstrecke jeweils mit einer n-1-Produktreihe im wesentlichen fluchten.

15. Vorrichtung nach einem der Ansprüche 7 bis 14,
dadurch gekennzeichnet,
daß die Geschwindigkeit des Transportbandes (1) geringfügig kleiner ist als die Geschwindigkeit der Mitnehmerelemente (12).
